# EUROPÄISCHE PATENTSCHRIFT

(11) **EP 1 590 173 B1**
(45) Veröffentlichungstag und Bekanntmachung des Hinweises auf die Patenterteilung: **02.08.2017**
(21) Anmeldenummer: 03807857.2
(22) Anmeldetag: 06.10.2003
(51) Int. Cl.: B32B 17/06, B32B 5/16, E04C 1/42

(54) **GLASBAUELEMENT MIT EINER TRÄGERPLATTE AUS GLAS**
GLASS COMPONENT COMPRISING A GLASS CARRIER PLATE
COMPOSANT EN VERRE COMPORTANT UNE PLAQUE SUPPORT EN VERRE

(30) Priorität: 08.10.2002 AT 6692002; 04.06.2003 AT 8712003
(43) Veröffentlichungstag der Anmeldung: 02.11.2005
(73) Patentinhaber: Glaszone GmbH, 3531 Werschenschlag (AT)
(72) Erfinder: ZELLER, Martin, A-3531 Werschenschlag (AT); STEINDL, Roman, A-3910 Zwettl (AT)
(74) Vertreter: Müllner, Martin
(86) Internationale Anmeldenummer: PCT/EP2003/050696
(87) Internationale Veröffentlichungsnummer: WO 2004/033198

(56) Entgegenhaltungen:
- EP-A- 0 192 249
- DE-A- 4 212 925

## Beschreibung

### TECHNISCHES GEBIET

Die vorliegende Erfindung betrifft ein Glasbauelement mit einer lichtdurchlässigen Trägerplatte und mit einer Beschichtung auf der Trägerplatte und mit mindestens einer die Beschichtung abdeckenden Deckplatte.

### STAND DER TECHNIK

Es sind Verbundglasscheiben, die sich aus mindestens zwei zueinander parallel beabstandeten Einzelplatten und einem Randverbund zusammensetzen, bekannt. Um die Wärmedämmeigenschaften derartiger Verbundglaselemente zu verbessern, wird zwischen den beiden Platten ein Vakuum hergestellt, bzw. der Raum zwischen den beiden Platten mit einem Edelgas gefüllt. Als weitere Maßnahme zur Vergütung der Glasbauelemente in Hinsicht auf die Wärmedämmung ist eine Metallbedampfung an einer der Innenseiten einer Glasplatte, die vorzugsweise an der Gebäudeaußenseite angeordnet ist, bekannt. Die bedampfte Oberfläche der Trägerplatte wird von der zweiten, parallelen Deckplatte geschützt. Weiters ist bekannt zu Dekorationszwecken in einen Glasbehälter mit planen Seitenwänden, Sand, Steine oder Glasstücke einzubringen. Verwendet man als Schüttgut geschliffenes Glas bzw. Glasstücke und bestrahlt dieses mit Licht, so erhält man brillant schimmernd und funkelnde Lichtreflexionseffekte. Das Material wird dabei in loser Schüttung in den Behälter eingebracht. Als Nachteil wird dabei empfunden, dass sich das lose geschüttete Material mit der Zeit durch Erschütterungen verdichtet und sich im Bereich der oberen Kante der Glasplatte eine unbefüllte Zone ausbildet, die eventuell wieder mit Schüttgut nachverfüllt werden muss. Als weiterer Nachteil wird gesehen, dass der Randbereich bzw. der Randverbund durch die Masse des losen Schüttgutes extrem belastet wird.

Zum Zweck des Sichtschutzes wird zum Beispiel bei Toiletten und Badezimmerfenster Milchglas, das die Durchsicht erschwert, als Fensterglas verwendet bzw. in Verbundglasscheiben integriert. Weiters werden auch Gläser mit eingeprägten Mustern verwendet, die ebenfalls die ungehinderte Durchsicht verhindern. Solchen Gläser werden nicht als architektonische Gestaltungsmittel eingesetzt, zumal keine besonderen Lichteffekte durch die einteilige Glasfläche möglich sind. DE 4212925 A offenbart ein Bauelement bestehend aus einer lichtdurchlässigen Trägerplatte und einer Beschichtung auf der Trägerplatte. Die Beschichtung ist ein durch Fixiermittel gebundener ausgehärtender Belag aus Granulatteilchen aus Kunststoff oder Kunstglas.

### OFFENBARUNG DER ERFINDUNG

Die Erfindung zielt darauf ab, ein Glasbauelement zur Verfügung zu stellen, das sowohl interessante Licht- und Designeffekte als auch eine dauerhafte, gleichmäßige Füllmaterialaufteilung ermöglicht und weiters die Verwendung als Verbundglaselement gestattet. Es soll die Basis für Heiz- und Kühlsysteme, für Energiegewinnung und für Brandschutzausrüstungen darstellen.

Diese Aufgabe wird durch ein Glasbauelement der eingangs beschriebenen Art erfindungsgemäß dadurch gelöst, dass die Beschichtung ein durch ein Fixiermittel gebundener ausgehärteter Belag aus Glasstücken, insbesondere Glasbruchstücken, ist. Auf diese Weise erhält man ein Glasbauelement, das auch bei vertikalem Einbau eine dauerhafte, gleichmäßige Verteilung der Glasstücke über die gesamte zur Verfügung stehende Fläche, die der Oberfläche der Trägerplatte entspricht, sicherstellt. Durch die unzähligen Kanten und Flächen der gebrochenen Glasstücke ergeben sich durch die Oberflächenbenetzung mit dem Fixiermittel bei Lichteinfall faszinierende, brillant funkelnde Lichtreflexionen.

Weiters wird die Aufgabe durch ein Verfahren zur Herstellung derartiger Glasbauelemente dadurch gelöst, dass auf die Trägerplatte randseitig Distanzstege aufgeklebt werden, dass auf die horizontal positionierte Trägerplatte eine Masse aus einem Gemisch aus Glasbruchstücken und einem Fixiermittel aufgebracht und gegebenenfalls glatt verstrichen wird und dass nach dem Aushärten eine Deckplatte auf die Distanzstege aufgelegt und mit diesen verklebt wird.

Eine bevorzugte Ausführungsform sieht weiters vor, dass die Glasbruchstücke aus zerkleinertem Bleikristallglas bestehen. Die in Brechmühlen zerkleinerten Bleikristallglasstücke verleihen dem Glasbauelement bei einer Lichtbestrahlung eine besondere Farbvielfalt.

Weiters ist es zweckmäßig, wenn das Fixiermittel ein lösungsmittelfreies aliphatisches Polyurethan ist. Durch die Verwendung eines solchen Fixiermittels wird sichergestellt, dass das Glasbauelement auf Dauer nicht vergilbt, lichtecht und schlagzäh bleibt. Ganz wesentlich trägt dieses Fixiermittel zur Brillanz der Oberflächen der Glasbruchstücke bei.

Ein besonderes Merkmal der Erfindung sieht vor, der Anteil des Fixiermittels etwa zwischen 0,5 und 10 Masse-%, vorzugsweise 2,5 Masse-%, der Beschichtung beträgt. Durch diesen gering scheinenden Anteil des Fixiermittels wird lediglich die Oberfläche der Glasbruchstücke benetzt, um nur deren Berührungspunkte miteinander zu verkleben bzw. zu fixieren und um die gebrochenen Kanten und Bruchflächen nicht vollständig in Fixiermittel zu vergießen, da sonst die Grundlage für die vielfältigen Lichtbrechungen zerstört werden würde. Es ist wichtig, dass die gesamte Oberfläche aller Glasbruchstücke hauchdünn von diesem Fixiermittel überzogen ist.

Eine für Brandschutzzwecke konzipierte Ausrüstung des Glasbauelementes sieht vor, dass das Fixiermittel Wasserglas, insbesondere eine wässerige Natrium-, Kalium- oder Lithiumsilikatlösung ist. Wenn der Anteil des Fixiermittels bezogen auf die Glasbruchstücke 8 bis 15 Masse-%, vorzugsweise 10 Masse-% beträgt, dann kommt es bei Hitzeeinwirkung zu einem Aufschäumen des Fixiermittels Wasserglas und zu einer weiteren Verbesserung des Brandschutzes.

Es ist ferner zweckmäßig, wenn die Stärke der Beschichtung etwa der zweifachen Korngröße der Glasbruchstücke entspricht. Diese Schichtstärke stellt sicher, dass die Glasbruchstücke eine überlappende Beschichtung der Trägerplatte ergeben und somit ein klarer Durchblick durch das Element verhindert wird.

Ferner ist vorgesehen, dass die Beschichtung einseitig auf der als lichtdurchlässige Platte ausgebildeten Trägerplatte aufgebracht und eine Deckplatte aus lichtdurchlässigem Material in einem die Stärke der Beschichtung überragenden Abstand zur Trägerplatte vorgesehen ist. Durch die Abdeckung der Beschichtung mit einer Deckplatte und einer Einfassung des Randbereiches mit einem herkömmlichen Randverbundsystem kann das Glasbauelement herkömmliche Verbundglasscheiben in Tür- oder Fensterflügeln ersetzen.

Ebenso ist es zweckmäßig, wenn auf der Trägerplatte auf der der Beschichtung abgewandten Seite eine Verspiegelung aufgebracht ist. Dadurch wird ermöglicht, dass erfindungsgemäße Glasbauelemente direkt vor Wänden angeordnet werden können, da das für die Lichtreflektion notwendige Licht von der Seite aus einfallen kann, von der das Glasbauelement betrachtet wird. Das einfallende Licht durchdringt die Beschichtung und die Trägerplatte und wird durch die Verspiegelung an der Rückseite wieder zurück zur Elementoberfläche reflektiert.

Möchte man das Glasbauelement z.B. als Deckplatte einer Leuchte verwenden, ist es zweckmäßig, dass die Trägerplatte aus Milchglas besteht. Durch das Milchglas wird das Licht der Lichtquelle gestreut und der Betrachter der Leuchte nimmt die Lichtquelle großflächiger und gleichmäßiger wahr.

Es ist anzumerken, dass die Seite des Glasbauelementes, die von der Deckplatte abgedeckt ist, optisch ansprechender erscheint, da die Deckplatte mit der Beschichtung nicht verklebt ist. Daraus ergibt sich eine alternative Ausführungsform, bei der die Beschichtung beiderseits der Trägerplatte aufgebracht ist und die Beschichtungen zu beiden Seiten jeweils durch eine Deckplatte aus durchsichtigem Glas mit geringem Abstand zur Oberfläche der jeweiligen Beschichtung abgedeckt sind. Eine derartige Ausbildung ist anzuwenden, wenn das Glasbauelement z.B. als ein von beiden Seiten zugängliches Trennwandelement verwendet wird und beide Oberflächen über ein gleichermaßen ansprechendes Aussehen verfügen sollen.

Erfindungsgemäß ist es schließlich zweckmäßig, wenn die Glasbruchstücke mit dem Fixiermittel in einem Mischer verrührt werden, bis die gesamte Oberfläche der Glasbruchstücke vom Fixiermittel benetzt und eine fließfähige Masse gebildet ist. Da die Oberfläche der Glasbruchstücke von dem Fixiermittel nur benetzt wird, verkleben die Glasbruchstücke nur an den Berührungspunkten und die unzähligen gebrochenen Kanten und Flächen bleiben in der Masse als Lichtreflexionszonen erhalten.

Das Glasbauelement kann als temporäre oder permanente Trennwand im Innenausbau eingesetzt werden. Dazu werden entsprechend große Platten gefertigt oder mehrere kleinere Platten in eine Gitterstruktur eingesetzt. Insbesondere bei diesem Einsatzgebiet ist es zweckmäßig, wenn zwischen der Trägerplatte und der Deckplatte, vorzugsweise innerhalb der Beschichtung aus den Glasbruchstücken an Heiz- oder Kühlgeräte anschließbare Rohr- oder Schlauchleitungen, z.B. in Form von Leitungsschlangen oder als Rohrregister zum Wärmeaustausch vorgesehen sind. Die so erreichten Wände sind ein wesentlicher Beitrag zur Klimatisierung. Es kann besonders wirksam und ohne Gebläse gekühlt und auch geheizt werden. Die Rohr-oder Schlauchleitungen werden dabei von einem Medium durchflossen, das thermische Energie zuführt oder abführt. In der Anwendung als Fassadenplatte sammelt das Glasbauelement Sonnenenergie und eignet sich hervorragend als Kollektor im Rahmen von Solaranlagen.

### KURZE BESCHREIBUNG DER ZEICHNUNGEN

Ein Ausführungsbeispiel des Erfindungsgegenstandes ist in den Zeichnungen dargestellt.

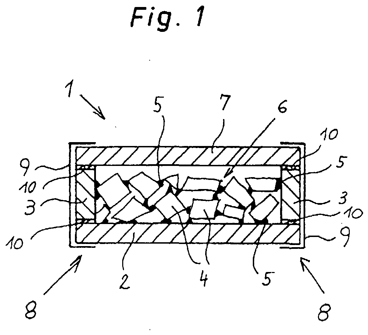

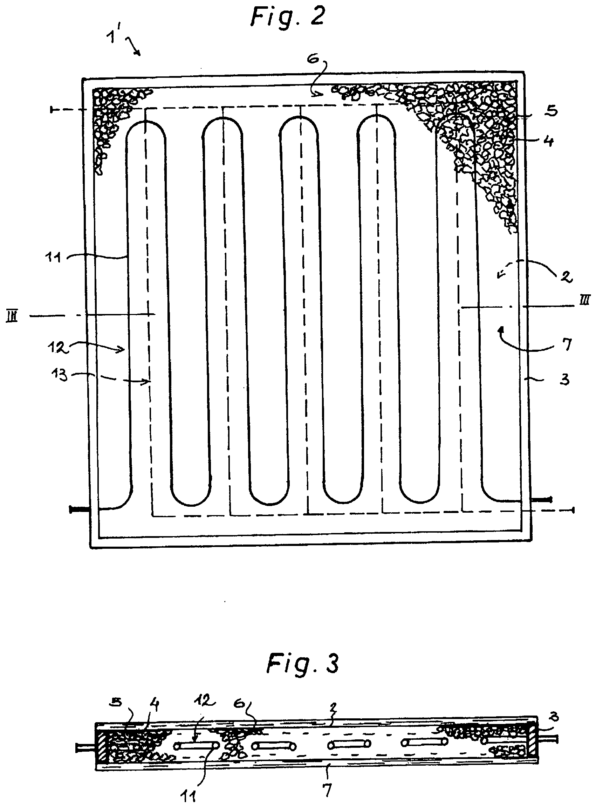

Fig. 1 zeigt ein Glasbauelement im Querschnitt, Fig. 2 eine Ansicht einer Ausführungsvariante und Fig. 3 einen Querschnitt nach der Linie III-III in Fig. 2.

### BESTE AUSFÜHRUNGSFORM DER ERFINDUNG

Ein Glasbauelement 1 umfasst eine Trägerplatte 2 aus Glas. Als Werkstoff wird beispielsweise feuerpoliertes Glas (float glas), vorgespanntes Glas (Einscheibensicherheitsglas ESG) bzw. Verbundglas (float glas und ESG) verwendet. Die Dicke beträgt ca. 4-6 mm. In Sonderfällen können aber auch wesentlich stärkere Glasplatten eingesetzt werden. Auf die Trägerplatte 2 wird im Randbereich ein Distanzsteg 3 aufgeklebt. Der Distanzsteg 3 besteht aus einem Abstandhalterprofil aus Aluminium oder Nirosta. Das Profil ist mit einem Trockenmittel gefüllt, um eventuell eintretende Feuchtigkeit zwischen den Scheiben aufnehmen zu können und um so ein Beschlagen zu verhindern. Die Verklebung der Distanzstege 3 mit der Trägerplatte 2 wird mit einem Klebstoff 10, z.B. Polyisobutylen durchgeführt und dient als sogenannte Primärabdichtung. Um ein dauerhaftes Beschlagen (fogging) der Trägerplatte 2 ab der Aushärtung des Klebstoffes 10 zu unterbinden, dürfen ausschließlich lösungsmittelfreie Klebstoffe 10 verwendet werden. Der um die Trägerplatte 2 rundumlaufende Distanzsteg 3 bildet gemeinsam mit der Trägerplatte 2 eine Wanne aus, in die eine Beschichtung 6 aus Glasbruchstücken 4 und einem Fixiermittel 5 eingefüllt wird. Die Glasbruchstücke 4 bestehen aus Bleikristall und werden aus Abfallprodukten der Glaserzeugung gewonnen. Die Bleikristallabfälle werden in Brechmühlen gebrochen und danach nach der Größe bzw. Körnung klassifiziert. Die Glasbruchstücke 4 werden mit dem Fixiermittel 5 vermischt. Als Fixiermittel 5 wird ein aliphatisches, Polyurethan verwendet, das die Konsistenz eines dünnflüssigen Honigs besitzt. Der Fixiermittelanteil der Beschichtung 6 beträgt etwa 2,5 Masse-%. Die Beschichtung 6 hat dann etwa die Konsistenz einer breiförmigen Masse. Das aliphatische Polyurethan ist ein lösungsmittelfreies, feuchtigkeitshärtendes Bindemittel.

Weiters können Fixiermittel 5 bzw. auf Methacrylat- oder Epoxidbasis verwendet werden. Bei Verwendung dieser Fixiermittel 5 bleibt die Beschichtung 6 auch nach dem Aushärten elastisch.

Übliche verwendete Korngrößen der Glasbruchstücke 4 sind 3 bis 7 mm und 7 bis 11 mm. Beim Auftragen der Beschichtung 6 auf die Trägerplatte 2 ist darauf zu achten, dass die Schichtstärke der Beschichtung 6 zwischen der einfachen und der zweifachen Korngröße der Glasbruchstücke 4 liegt. Höhere Schichtstärken absorbieren zu viel Licht und der gewünschte kristallisch glitzernde Effekt geht verloren. Um nahe der Oberfläche der Trägerplatte 2 eine hohe Anzahl an Glasbruchstücken 4 anzuordnen, kann die Trägerplatte 2 mit der aufgetragenen Beschichtung 6 durch Vibrationen oder Ultraschall zusätzlich verdichtet werden.

Will man verhindern, dass Glasbruchstücke 4 aus der Beschichtung 6 herausstehen kann zur annähernden Oberflächenglättung bzw. zur Egalisierung der Schüttung die Oberfläche gewalzt oder mit einem Abstreifer geglättet werden.

Allfällig im Glasgranulat bzw. zwischen den Glasbruchstücken 4 enthaltener Glasstaub wird von dem Fixiermittel 5 umnetzt und verhält sich sodann unsichtbar.

Die Aushärtezeit für die Beschichtung 6 beträgt bei Schichtstärken von cirka 1 cm 24 h. Die Aushärtezeit kann durch Beimischung eines Aushärtebeschleunigers in das Fixiermittel 5 gesteuert werden und so üblicherweise auf bis zu 2 h verkürzt werden. Die Aushärtezeit kann auch durch die Zugabe von noch größeren Aushärtebeschleunigermengen auf wenige Minuten (z.B. 2 bis 5 min) verkürzt werden. Nach der Aushärtung wird auf den rundumlaufenden Distanzsteg 3 eine Deckplatte 7 aufgelegt und verklebt. Für das Verkleben der Deckplatte 7 mit dem Distanzsteg 3 wird ebenfalls Polyisobutylen verwendet. Es ist wichtig, dass die Verdeckelung erst nach dem vollständigen Aushärten der Beschichtung 6 erfolgt, da das Fixiermittel 5 exotherm aushärtet und dadurch die Deckplatte 7 durch die zu großen thermischen Beanspruchungen zerstört werden würde. Weiters setzt der Aushärtebeschleuniger während dem Aushärten Gase frei, die ungehindert entweichen können müssen. Der Randverbund 8 wird durch die Beschichtung 6 nicht belastet, da durch das Fixiermittel 5 die Gewichtsbelastung auf der gesamten Glasfläche verteilt wird.

Die Verklebung der Träger- und Deckelplatte 2, 7 mit dem Steg 3 erfolgt mit Polyisobutylen, z.B. Terostat 969 und dient als Wasserdampfsperre. Ein Randverbund 8 erhält seine mechanische Stabilität und Fixierung erst durch eine Randversiegelung 9 auf Basis von Polysulfidpolymeren, z.B. Terostat 998R.

Als alternativen Werkstoff für die Trägerplatte 2 und die Deckplatte 7 können auch lichtdurchlässige Kunststoffplatten wie z.B. Plexiglas oder Acrylglas verwendet werden.

Um zu unterschiedlichen Beschichtungen 6 zu gelangen, werden als Variation der Glasbruchstücke 4 weiters Glaskugeln, geschliffene Glaskristalle, Einscheibensicherheitsglasbruchstücke (PKW-Windschutzscheiben), sowie Bunt- und Weißglas-Recyclingmaterial verwendet. Die sortierten, unterschiedlichen Glassorten der Glasbruchstücke 4 werden, um Designeffekte zu erzielen, beispielsweise ornamentartig auf die Trägerplatte 2 aufgetragen.

Fig. 2 und 3 zeigen ein erfindungsgemäßes Glasbauelement 1', welches gemäß Fig. 1 aufgebaut ist: Zwischen einer Trägerplatte 2 und einer Abdeckplatte 7 sind die mit Fixiermittel 5 überzogenen und an den Berührungsstellen punktuell bzw. flächig verbundenen Glasbruchstücke 4 vorgesehen. Diese füllen den Zwischenraum in einer Stärke gemäß den Distanzstegen 3 weitgehend aus. Zusätzlich sind jedoch im Zwischenraum noch Rohr- oder Schlauchleitungen 11 in Form von Kunststoff- oder Metallröhrchen bzw. flexiblen Schläuchen angebaut, die als Rohrleitungsschlangen 12 oder Rohrregister 13 ausgeführt sind. Diese Leitungen können glasklar bzw. transparent sein, wenn das Glasbauelement 1' maximale Belichtung gewährleisten soll. Bei einem Ausführungsbeispiel wurden auch Rohrleitungen aus Edelstahl eingesetzt.

Die Rohr- oder Schlauchleitungen 11 sind in ein Heiz- und bzw. oder Kühlsystem eingebunden und tragen wesentlich zur Klimatisierung bei, insbesondere dann, wenn das Glasbauelement 1' im Innenausbau als temporäre Raumtrenner oder als fixe Trennwand Verwendung findet.

Eine weitere Anwendung findet das Glasbauelement 1' nach den Fig. 2 und 3 als Fassadenelement, wo es als Wärmekollektor mit hohem Wirkungsgrad infolge der Brennglaswirkung der Glasbruchstücke 4 eingesetzt werden kann. Natürlich können auch transparente Außenwände, die der Raumbelichtung dienen, diese Doppelfunktion erfüllen.

Eine weitere Besonderheit ergibt sich, wenn die Glasbruchstücke, die eine Glasbruchschüttung bilden, durch ein Fixiermittel unter Verwendung von Wasserglas gebunden werden. Da derartige anorganische Bindemittel unbrennbar sind, entsteht bei Verwendung von Wasserglas, nämlich wässerigen Natrium-, Kalium- oder Lithiniumsilikatlösungen, ein Aufbau, der den Anforderungen einer Brandschutzverglasung entspricht. Je nach dem Aufbau, insbesondere nach der Stärke der Schüttung und der Höhe des Bindemittelanteils können Brandwiderstandsklassen von G 30 bis G 120 bzw. F 30 bis F 120 erreicht werden. Im Brandfall kann die dem Feuer zugewandte Glasscheibe sehr hohe Temperaturen erreichen und allenfalls bersten. Das glasklare, UV-stabile Fixier- oder Bindemittel auf Wasserglasbasis schäumt zu einer weißen amorphen aber noch bindenden Masse auf. Die Schüttung aus gebundenen Glasbruchstücken wird dadurch undurchsichtig weiß und stark IR-reflektierend. Die Wärmeenergie wird sehr gut über die einzelnen Stücke der Schüttung verteilt. Hitzedurchtritt, Feuer- und Rauchdurchtritt werden verhindert. Damit kommt es auch nicht zum Bruch der zweiten Scheibe, die vom Feuer abgewandt ist.

Bei einem konkreten Ausführungsbeispiel wurden zwischen jeweils 4 mm starken ESG-Glasscheiben neue 10 mm starke Schüttung aus Glasbruchstücken fixiert. Es werden Bleikristallbruchstücke, farblos, mit einer Körnung von 3-7 eingesetzt. Der Fixiermittelanteil zur Bindung betrug 10 Gew.-%, bezogen auf die Glasbruchstücke. Als Fixier- oder Bindemittel wurde Natriumsilikat, sogenanntes "Natronwasserglas" eingesetzt:
Na₂O ca. 12,7 %
SiO₂ ca. 31,8 %
Gewichtsverhältnis:
SiO₂: Na₂O ca. 2,5
Molverhältnis:
SiO₂:Na₂O ca. 2,55
Feststoffgehalt ca. 44,5 %
Dichte (20°C) ca. 1,52 g/cm³

Es konnte eine Brandklasse F 60 erreicht und übertroffen werden.

## Patentansprüche

1. Glasbauelement mit einer lichtdurchlässigen Trägerplatte und mit einer Beschichtung auf der Trägerplatte und mit mindestens einer die Beschichtung abdeckenden Deckplatte, **dadurch gekennzeichnet, dass** die Beschichtung (6) ein durch ein Fixiermittel (5) gebundener ausgehärteter Belag aus Glasstücken, insbesondere Glasbruchstücken (4), ist.

2. Glasbauelement nach Anspruch 1, **dadurch gekennzeichnet, dass** die Glasbruchstücke (4) aus zerkleinertem Bleikristall bestehen.

3. Glasbauelement nach den Ansprüchen 1 oder 2, **dadurch gekennzeichnet, dass** das Fixiermittel (5) ein lösungsmittelfreies aliphatisches Polyurethan ist.

4. Glasbauelement nach einem der Ansprüche 1 bis 3, **dadurch gekennzeichnet, dass** der Anteil des Fixiermittels (5) etwa zwischen 0,5 und 12 Masse-%, vorzugsweise 2,5 Masse-%, der Beschichtung (6) beträgt.

5. Glasbauelement nach den Ansprüchen 1 oder 2, **dadurch gekennzeichnet, dass** das Fixiermittel (5) Wasserglas, insbesondere eine wässerige Natrium-, Kalium-oder Lithiumsilikatlösung ist.

6. Glasbauelement nach Anspruch 5, **dadurch gekennzeichnet, dass** bei einem Fixiermittel (5) aus Wasserglas zur Brandschutzausrüstung der Anteil des Fixiermittels bezogen auf die Glasbruchstücke (4) 8 bis 15 Masse-%, vorzugsweise 10 Masse-% beträgt.

7. Glasbauelement nach einem der Ansprüche 1 bis 6, **dadurch gekennzeichnet, dass** die Stärke der Beschichtung (6) etwa der zweifachen Korngrösse der Glasbruchstücke (4) entspricht.

8. Glasbauelement nach den Ansprüchen 1 bis 7, **dadurch gekennzeichnet, dass** auf der Trägerplatte (2) auf der der Beschichtung (6) abgewandten Seite eine Verspiegelung aufgebracht ist.

9. Glasbauelement nach den Ansprüchen 1 bis 8, **dadurch gekennzeichnet, dass** die Trägerplatte (2) aus Milchglas besteht.

10. Glasbauelement nach einem der Ansprüche 1 bis 9, **dadurch gekennzeichnet, dass** die Beschichtung (6) einseitig auf der als lichtdurchlässige Platte ausgebildeten Trägerplatte (2) aufgebracht und eine Deckplatte (7) aus lichtdurchlässigem Material in einem die Stärke der Beschichtung (6) überragenden Abstand zur Trägerplatte (2) vorgesehen ist.

11. Glasbauelement nach einem der Ansprüche 1 bis 9, **dadurch gekennzeichnet, dass** die Beschichtung (6) beiderseits der Trägerplatte (2) aufgebracht ist und die Beschichtungen (6) zu beiden Seiten jeweils durch eine Deckplatte (7) aus durchsichtigem Glas mit geringem Abstand zur Oberfläche der jeweiligen Beschichtung (6) abgedeckt sind.

12. Glasbauelement nach einem der Ansprüche 1 bis 11, **dadurch gekennzeichnet, dass** zwischen der Trägerplatte (2) und der Deckplatte (7), vorzugsweise innerhalb der Beschichtung (6) aus den Glasbruchstücken (4) an Heiz-oder Kühlgeräte oder als Kollektoren zur Energiegewinnung anschließbare Rohr-oder Schlauchleitungen (11), z. B. in Form von Leitungsschlangen (12) oder als Rohrregister (13) zum Wärmeaustausch vorgesehen sind.

13. Verfahren zur Herstellung eines Glasbauelementes nach einem der Ansprüche 1 bis 12, **dadurch gekennzeichnet, dass** auf die Trägerplatte randseitig Distanzstege aufgeklebt werden, dass auf die horizontal positionierte Träger- platte eine Masse aus einem Gemisch aus Glasbruchstücken und einem Fixiermittel aufgebracht und gegebenenfalls nach Einlegen von Rohr-oder Schlauchleitungen glatt verstrichen wird und dass nach dem Aushärten eine Deckplatte auf die Distanzstege aufgelegt und mit diesen verklebt wird.

14. Verfahren nach Anspruch 13, **dadurch gekennzeichnet, dass** die Glasbruchstücke mit dem Fixiermittel in einem Mischer verrührt werden, bis die gesamte Oberfläche der Glasbruchstücke vom Fixiermittel benetzt und eine fließfähige Masse gebildet ist.

## Claims

1. Glass component having a light-permeable carrier plate and having a coating on the carrier plate and having at least one covering plate that covers the coating, **characterised in that** the coating (6) is a cured layer of glass pieces, in particular glass fragments (4), and is bound by means of a fixing agent (5).

2. Glass component according to claim 1, **characterised in that** the glass fragments (4) are embodied from fragmented lead crystal.

3. Glass component according to any one of the claims 1 or 2, **characterised in that** the fixing agent (5) is a solvent-free aliphatic polyurethane.

4. Glass component according to any one of the claims 1 to 3, **characterised in that** the proportion of the fixing agent (5) is approximately between 0.5 and 12% of the mass, preferably 2.5% mass, of the coating (6).

5. Glass component according to any one of the claims 1 or 2, **characterised in that** the fixing agent (5) is water glass, in particular an aqueous sodium silicate solution, potassium silicate solution or lithium silicate solution.

6. Glass component according to claim 5, **characterised in that** in the case of a fixing agent (5) of water glass for the purpose of preventing fire the proportion of the fixing agent in relation to the glass fragments (4) is 8 to 15% mass, preferably 10% mass.

7. Glass component according to any one of the claims 1 to 6, **characterised in that** the thickness of the coating (6) corresponds approximately to double the particle size of the glass fragments (4).

8. Glass component according to the claims 1 to 7, **characterised in that** a mirror coating is applied to the carrier plate (2) on the face that is remote from the coating (6).

9. Glass component according to the claims 1 to 8, **characterised in that** the carrier plate (2) is embodied from translucent glass.

10. Glass component according to any one of the claims 1 to 9, **characterised in that** the coating (6) is applied to one face of the carrier plate (2) that is configured as a light-permeable plate and a covering plate (7) that is embodied from light-permeable material is provided in a distance from the carrier plate (2), said distance protruding over the thickness of the coating (6).

11. Glass component according to any one of the claims 1 to 9, **characterised in that** the coating (6) is applied to the two faces of the carrier plate (2) and the coatings (6) on both faces are covered in each case by means of a covering plate (7) that is embodied from transparent glass having a small gap with respect to the surface of the respective coating (6).

12. Glass component according to any one of the claims 1 to 11, **characterised in that** tubing or hose lines (11), for example in the form of a bank of tubes (13) or a meandering arrangement of tubing (12) for exchanging heat are provided between the carrier plate (2) and the covering plate (7), preferably within the coating (6) that is embodied from glass fragments (4), and said bank of tubes or meandering arrangement of tubing can be connected to heating devices or cooling devices or can be connected as collectors for obtaining energy.

13. Method for producing a glass component according to any one of the claims 1 to 12, **characterised in that** spacer bars are bonded to the carrier plate on the edge-side, that a mass that is embodied from a mixture of glass fragments and a fixing agent is applied to the carrier plate that is positioned in a horizontal manner and said mass is smoothed out, where appropriate after positioning the tubing or hose lines, and that after the mass has cured a covering plate is placed on the spacer bars and is bonded to said spacer bars.

14. Method according to claim 13, **characterised in that** the glass fragments are agitated in a mixer with the fixing agent until the entire surface of the glass fragments is moistened by the fixing agent and a mass that can flow is formed.

## Revendications

1. Elément de construction en verre pourvu d'une plaque de support transparente et d'un revêtement disposé sur ladite plaque de support et d'au moins une plaque de couverture recouvrant ledit revêtement, **caractérisé en ce que** le revêtement (6) est une garniture complètement durcie laquelle est constituée de morceaux de verre, notamment de bris de verre (4), et liée au moyen d'un agent de fixation (5).

2. Elément de construction en verre selon la revendication 1, **caractérisé en ce que** les bris de verre (4) sont constitués de cristal broyé.

3. Elément de construction en verre selon les revendications 1 ou 2, **caractérisé en ce que** l'agent de fixation (5) est un polyuréthane aliphatique exempt de solvants.

4. Elément de construction en verre selon l'une des revendications 1 à 3, **caractérisé en ce que** la proportion de l'agent de fixation (5) est comprise entre environ 0,5 et 12 % en masse, de préférence 2,5 % en masse, par rapport au revêtement (6).

5. Elément de construction en verre selon les revendications 1 ou 2, **caractérisé en ce que** l'agent de fixation (5) est du verre soluble, s'agissant notamment d'une solution aqueuse de silicate de sodium, de potassium ou de lithium.

6. Elément de construction en verre selon la revendication 5, **caractérisé en ce que** la proportion de l'agent de fixation (5), lorsque ledit agent de fixation est du verre soluble employé à des fins de protection anti-incendie, est comprise entre 8 et 15 % en masse, de préférence 10 % en masse, par rapport aux bris de verre (4).

7. Elément de construction en verre selon l'une des revendications 1 à 6, **caractérisé en ce que** l'épaisseur du revêtement (6) correspond environ au double de la granulométrie des bris de verre (4).

8. Elément de construction en verre selon les revendications 1 à 7, **caractérisé en ce que**, sur sa face située à l'opposé du revêtement (6), la plaque de support (2) est pourvue d'une finition miroir.

9. Elément de construction en verre selon les revendications 1 à 8, **caractérisé en ce que** la plaque de support (2) est constituée de verre opalin.

10. Elément de construction en verre selon l'une des revendications 1 à 9, **caractérisé en ce que** le revêtement (6) est appliqué sur une seule face de la plaque de support (2) réalisée sous forme d'une plaque transparente et qu'une plaque de couverture (7), constituée d'un matériau transparent, est disposée à une distance de la plaque de support (2) qui est supérieure à l'épaisseur du revêtement (6).

11. Elément de construction en verre selon l'une des revendications 1 à 9, **caractérisé en ce que** le revêtement (6) est appliqué sur les deux faces de la plaque de support (2) et que, sur les deux côtés, les revêtements (6) sont chacun recouverts d'une plaque de couverture (7) en verre transparent disposée à une faible distance de la surface du revêtement (6) concerné.

12. Elément de construction en verre selon l'une des revendications 1 à 11, **caractérisé en ce que** des tuyaux rigides ou flexibles (11), agencés par exemple en serpentin (12) ou en harpe (13) pour ainsi permettre un échange de chaleur, sont disposés entre la plaque de support (2) et la plaque de couverture (7), préférentiellement au sein du revêtement (6) constitué de bris de verre (4), tout en pouvant être raccordés à des appareils de chauffage ou de production de froid ou bien de manière à constituer des capteurs permettant de produire de l'énergie.

13. Procédé de fabrication d'un élément de construction en verre selon l'une des revendications 1 à 12, **caractérisé en ce que** des éléments d'écartement sont collés en zone marginale sur ladite plaque de support, qu'une masse constituée d'un mélange de bris de verre et d'un agent de fixation est appliquée sur ladite plaque de support adoptant une position horizontale puis nivelée , le cas échéant, suite à la pose de tuyaux rigides ou flexibles, et qu'une fois le durcissement terminé, une plaque de couverture est posée sur les éléments d'écartement pour être collée à ceux-ci.

14. Procédé selon la revendication 13, **caractérisé en ce que** les bris de verre sont agités avec l'agent de fixation au sein d'un mélangeur jusqu'à ce que la surface des bris de verre soit entièrement mouillée et jusqu'à obtenir une masse susceptible de s'écouler.
